# EUROPÄISCHE PATENTANMELDUNG

(11) **EP 1 564 871 A1**
(43) Veröffentlichungstag der Anmeldung: **17.08.2005**
(21) Anmeldenummer: 05001753.2
(22) Anmeldetag: 28.01.2005
(51) Int. Cl.: H02K 15/04

(54) **Vorrichtung und Verfahren zum Herstellen von Statoren für elektrische Motoren und Generatoren**

(30) Priorität: 13.02.2004 DE 102004007475
(71) Anmelder: Elmotec Statomat Vertriebs GmbH, 61184 Karben (DE)
(72) Erfinder: Sadiku, Sadik, 63543 Neuberg (DE)
(74) Vertreter: Jochem, Bernd , Dipl.-Wirtsch.-Ing

(57) **Zusammenfassung**

Die Vorrichtung dient zum Herstellen von Statoren, die aus auf Spulenträger (22) gewickelten Spulen (20) und Teilen des Statorblechpakets gefügt sind. Sie hat eine Wickeleinrichtung mit mehreren Drahtführern (10), die jeweils mit einer schrittweise antreibbaren Werkstückaufnahme (24) zusammenwirken. Diese hat an ihrem Umfang mehrere Kupplungsstellen für Spulenträger (22), die an einer Beladestation fixierbar, an einer Wickelstation bewickelbar und an einer Endladestation lösbar und jeweils an eine Spulenfördereinrichtung (42) zum Weitertransport zu übergeben sind. Sie gelangen damit zu einem Palettenmagazin (48) mit reihenweise angeordneten Kupplungsstellen (50) zur lösbaren Fixierung der bewickelten Spulenträger (22). Vom Palettenmagazin (48) werden die Spulenträger (22) jeder Reihe jeweils an eine Fügeeinrichtung übergeben, durch die sie mit den Teilen eines Statorblechpakets zusammengefügt werden.

## Beschreibung

Die Erfindung betrifft eine Vorrichtung und ein Verfahren zum Herstellen von Statoren für elektrisch Motoren und Generatoren, die aus auf Spulenträger gewickelten Spulen und Teilen oder Verbindungsteilen eines Statorblechpakets gefügt werden.

Das bisher gebräuchlichste Verfahren zur Herstellung von Statoren für bürstenlose elektrische Motoren und Generatoren bzw. Lichtmaschinen geht von einem vollständigen Statorblechpaket aus, in dessen Statornuten vorgewickelte Spulen eingezogen, eingeträufelt oder eingewickelt werden. Darüber hinaus ist es auch bereits bekannt, die Spulen in ihrer endgültigen Form auf ringförmige Spulenträger oder separate Statorzähne als Spulenträger vorzuwickeln und danach mit den übrigen Statorteilen zusammenzufügen. Die bekannten Verfahren der zuletzt genannten Art eignen sich jedoch noch nicht für eine kostengünstige Massenfertigung, weil in diesem Fall eine Vielzahl einzelner Maschinen und Vorrichtungen mit großem Raumbedarf aufgestellt, einzeln angetrieben und unkoordiniert mit Werkstücken versorgt werden müssen.

Der Erfindung liegt deshalb die Aufgabe zugrunde, eine Vorrichtung und ein Verfahren der eingangs genannten Art zur Verfügung zu stellen, mit deren Hilfe mit geringstem maschinellen Einsatz und Raumbedarf eine Großserien- oder Massenproduktion betrieben werden kann.

Die zur Lösung der vorstehenden Aufgabe vorgeschlagene Vorrichtung ist gekennzeichnet durch
- eine Wickeleinrichtung mit mehreren rotierend antreibbaren, achsparallelen Drahtführern, die jeweils mit einer schrittweise umlaufend antreibbaren Werkstückaufnahme zusammenwirken, die an ihrem Umfang mehrere Kupplungsstellen zur lösbaren Fixierung von Spulenträgern aufweist, die an einer Beladestation an einer Kupplungsstelle fixierbar, an einer Wickelstation durch den zugeordneten Drahtführer mit Spulendraht bewickelbar und an einer Entladestation von der Werkstückaufnahme lösbar sind,
- eine Spulenfördereinrichtung mit Kupplungsstellen zur Aufnahme und lösbaren Fixierung der bewickelten Spulenträger an der Entladestation und zum Weitertransport,
- ein Palettenmagazin mit reihenweise angeordneten Kupplungsstellen zur Aufnahme und lösbaren Fixierung der von der Spulenfördereinrichtung herantransportierten, bewikkelten Spulenträger und
- eine Fügeeinrichtung, in der im Palettenmagazin in einer Reihe gesammelte, bewickelte Spulenträger mit den Teilen oder Verbindungsteilen eines Statorblechpakets zusammenfügbar sind.

Die vorgeschlagene Vorrichtung eignet sich sowohl zum Herstellen von Spulen und Montieren von Statoren, deren Spulen mit Drahtunterbrechung gewickelt und nach der Montage durch dann noch herzustellende Schaltverbindungen phasenweise zu verbinden sind, als auch zum Herstellen mehrerer nacheinander ohne Drahtunterbrechung gewickelter Spulen, die dann auch zusammenhängend zum Stator zusammengefügt werden. Im einzelnen sieht das erfindungsgemäße Verfahren vor, daß die zu einer Phase gehörenden Spulenträger ohne Drahtunterbrechung nacheinander bewickelt und zusammen mit den zu den anderen Phasen gehörenden, jeweils ohne Drahtunterbrechung bewickelten Spulenträgern in einem Palettenmagazin in einer Reihe derart abgelegt werden, daß ihre Reihenfolge mit derjenigen am Umfang des Stators übereinstimmt, und daß anschließend die bewickelten Spulenträger der Reihe nach an den Umfang eines rotierend antreibbaren Aufnehmers herangefahren, radial von außen an den Aufnehmer angefügt und danach mit einem sie radial außen umgebenden Joch zusammengefügt werden.

Im Falle von ringförmigen Spulenträgern kann der Aufnehmer aus einem kontinuierlich oder schrittweise rotierend antreibbaren Dorn bestehen, auf den der radial innere Bereich eines Statorblechpakets in Form der radial innen durch Stege verbundenen Statorzähne lösbar aufgesteckt ist. Nachdem die ringförmigen, bewickelten Spulenträger radial von außen auf die Statorzähne aufgeschoben worden sind, wird der so gebildete radial innere Teil des Stators axial in das ringförmige Joch eingeführt und z. B. mit Preßsitz oder losem Sitz zusammengefügt und ggf. noch durch Laserschweißen oder in anderer Weise form- oder materialschlüssig verbunden.

Wenn in einer anderen Ausführung die Statorzähne einzeln vorgefertigt und als Spulenträger bewickelt werden, sind sie beim Zusammenfügen ebenfalls zunächst lösbar mit einem rotierend antreibbaren Dorn zu verbinden und anschließend radial außen miteinander und/oder mit zusätzlichen Jochteilen zusammenzufügen und ggf. material- bzw. formschlüssig zu einem ringförmigen Joch zu verbinden.

Weitere Ausgestaltungsmerkmale der erfindungsgemäßen Vorrichtung und des neuen Verfahrens sind in den Unteransprüchen gekennzeichnet und werden nachstehend anhand eines in der Zeichnung dargestellten Ausführungsbeispiels näher erläutert.

Es zeigen:
- Fig. 1: eine Draufsicht auf die vorderen Einheiten einer Vorrichtung zur Herstellung von Statoren, wobei aus Platzgründen die Fügeeinrichtung nicht mit dargestellt ist;
- Fig. 2: eine Seitenansicht der sich an den gezeigten Teil der Vorrichtung nach Fig. 1 anschließenden Fügeeinrichtung;
- Fig. 3: eine Seitenansicht desjenigen Bereichs der Vorrichtung nach Fig. 1, in welchem die Spulenträger bewickelt werden, und
- Fig. 4: eine Draufsicht, z. T. im Schnitt, des in Fig. 3 gezeigten Teils der Vorrichtung.

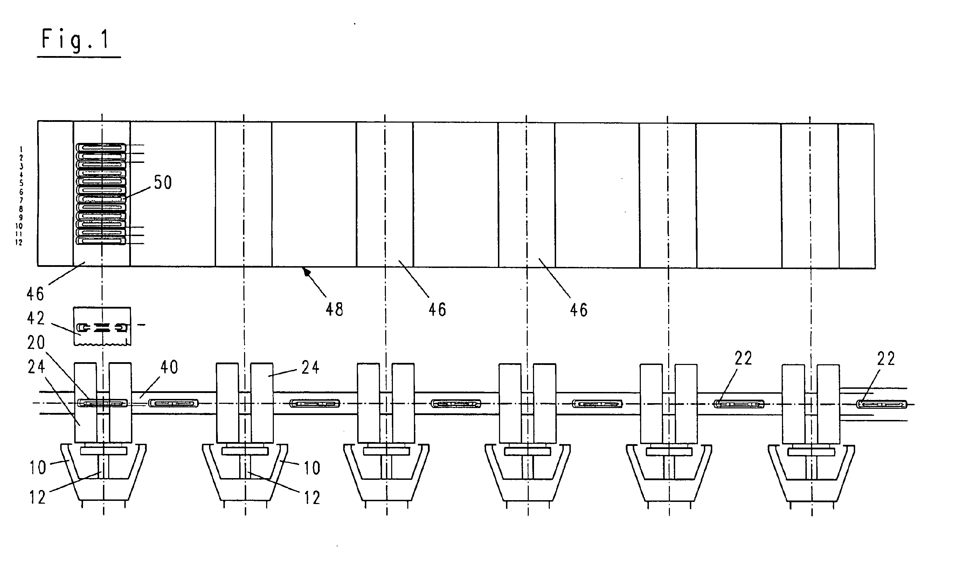

Wie in Fig. 1 gezeigt, hat die Vorrichtung eine Reihe von z. B. sechs nebeneinander in einer Ebene angeordneten Drahtführern 10, die auch als Wickelarme oder Flyer bezeichnet werden. Sie sind jeweils um eine Drehachse 12 rotierend antreibbar. Da die Drehachsen 12 in einer gemeinsamen, geraden, vorzugsweise horizontalen Ebene liegen, können die Drahtführer 10 z. B. über gleich große Zahnriemenscheiben 14, Kettenräder oder dergleichen in Verbindung mit einem gemeinsamen Zahnriemen bzw. einer Kette und einem einzigen Antriebsmotor angetrieben werden. Bei dieser Art eines einfachen, gemeinsamen Antriebs können ohne weiteres auch mehr als die gezeigten sechs Drahtführer gleichzeitig und mit gleicher Drehgeschwindigkeit angetrieben werden.

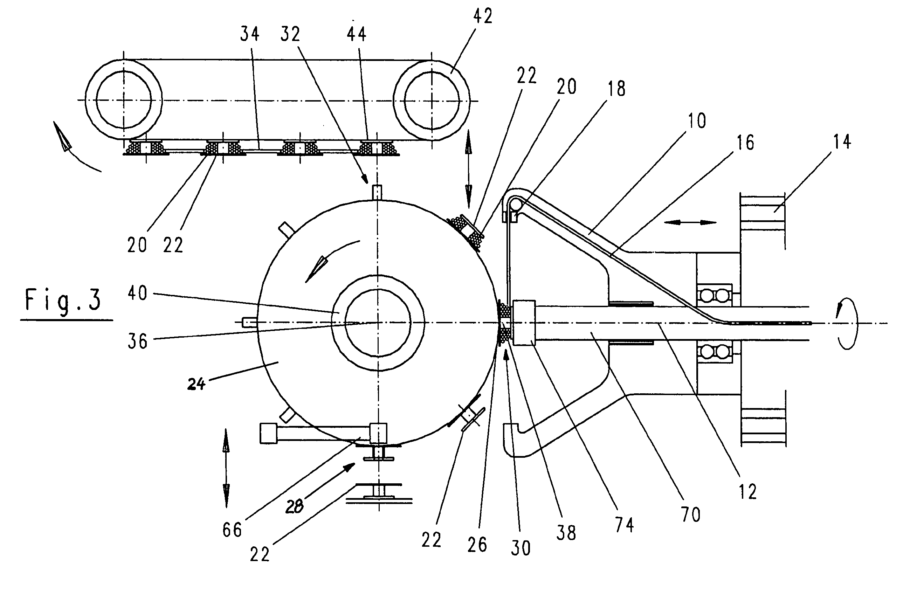

Wie am besten aus Fig. 3 ersichtlich, wird der mit 16 bezeichnete Spulendraht koaxial in den Drahtführer 10 eingeführt und dann innerhalb desselben mit Bezug auf die Drehachse 12 schräg nach radial außen zu einer Austrittsdüse 18 hin umgelenkt, die sich in einem ausreichend großen radialen Abstand von der Drehachse 12 befindet, um die benötigten länglichen Spulen 20 auf entsprechend länglichen Spulenträgern 22 erzeugen zu können.

Gemäß Fig. 3 dient zum Halten der Spulenträger 22 während des Wickelvorgangs eine kreisrunde, rotierend antreibbare Werkstückaufnahme 24. Sie ist mit gleichmäßig über ihren Umfang verteilten Kupplungsstellen 26 für die Spulenträger 22 versehen. Durch schrittweise Drehung der Werkstückaufnahme 24 werden diese Kupplungsstellen von einer in Fig. 3 unten gezeigten Beladestation 28 zu einer Wickelstation 30 und weiter zu einer Entladestation 32 sowie von dort wieder zur Beladestation 28 gedreht. An der Beladestation 28 wird bei jedem Arbeitsschritt ein Spulenträger 22 an die gerade dort befindliche Kupplungsstelle 26 herangebracht und daran fixiert. An der Wickelstation 30 werden die Spulenträger 22, wie in Fig. 3 gezeigt, derart bewickelt, daß an dem später im Stator radial außen befindlichen axialen Ende die Spule wesentlich dicker ist als an dem radial inneren Ende. Es werden somit auf den mit verhältnismäßig dünner Wandstärke aus Kunststoff hergestellten Spulenträgern 22 Spulen 20 erzeugt, deren konische Form der Tatsache Rechnung trägt, daß sich die Statornuten von radial innen nach radial außen erweitern.

In dem in Fig. 3 gezeigten Ausführungsbeispiel entspricht der Umfangsabstand der an den Kupplungsstellen 26 der Werkstückaufnahme 24 fixierten Spulenträger 22 dem Umfangsabstand der zu einer elektrischen Phase gehörenden Spulen. Dies bietet die Möglichkeit, die im Beispielsfall jeweils vier zu einer Phase gehörenden Spulen ohne Drahtunterbrechung hintereinander zu wickeln. Es bedarf lediglich eines an sich bekannten Drahtgreifers an der Wickelstation 30, der wahlweise am Ende eines Wickelvorgangs entweder das Drahtende festklemmt (wenn es geschnitten werden soll) oder lose führend hält, so daß bei der Weiterdrehung der Werkstückaufnahme und Mitnahme der zuletzt gewickelten Spule 20 in Richtung zur Entladestation 32 Draht aus der Düse 18 nachgezogen wird und auf diese Weise schon beim Wickeln die gewünschten Schaltverbindungen 34 zwischen den Spulen einer Phase gebildet werden.

Fig. 3 zeigt weiterhin, daß sich optimale räumliche Verhältnisse ergeben, wenn sich die mit 36 bezeichnete Drehachse der Werkstückaufnahme 24 in derselben horizontalen Ebene befindet wie die Drehachsen 12 der Drahtführer 10. Bei dieser Achslage kann auch die radiale Mittelachse 38 der Spulenträger 22 in der Wickelstation 30 genau in derselben horizontalen Ebene liegen, während bei einer im Hinblick auf die gewünschte Länge der Schaltverbindungen 34 geeigneten Wahl des Durchmessers der Werkstückaufnahme 24 gleichzeitig die Beladestation 28 und Entladestation 32 sich genau senkrecht unter bzw. über der Drehachse 36 der Werkstückaufnahme 24 befinden können. Dort lassen sich die Spulenträger 22 mit senkrecht ausgerichteter radialer Mittelachse 38, also in einer normalen Stellung, durch einfache Fördereinrichtungen horizontal heranführen bzw. nach dem Bewickeln auch wieder horizontal weiterbefördern. Im übrigen sind, entsprechend wie die Drahtführer 10, auch die jeweils zugehörigen Werkstückaufnahmen 24 in ihren Maßen und in der Ausrichtung der Kupplungsstellen 26 gleich, und alle sechs Werkstückaufnahmen 24 sitzen drehfest auf einer gemeinsamen Antriebswelle 40, so daß wiederum ein einziger Antrieb 41 für ihre schrittweise Drehbewegung genügt.

Als Spulenfördereinrichtung ist in Fig. 3 ein schrittweise umlaufend antreibbarer Ketten- oder Bandförderer 42 gezeigt, der an seinem umlaufenden Förderorgan mit ebensolchen oder ähnlichen Kupplungsstellen 44 versehen ist wie die Kupplungsstellen 26 der Werkstückaufnahme 24. Auch der Zwischenabstand der Kupplungsstellen 44 stimmt vorzugsweise mit dem am Umfang gemessenen Abstand der Kupplungsstellen 26 der Werkstückaufnahme 24 überein. Es genügt wiederum ein einziger Antrieb für alle sechs Spulenfördereinrichtungen 42, um diese im Takt mit der Schaltbewegung der sechs Werkstückaufnahmen 24 schrittweise anzutreiben. Der Antrieb der Spulenfördereinrichtungen 42 kann sogar von dem Antrieb der Werkstückaufnahmen 24 abgezweigt sein.

Die Spulenfördereinrichtung 42 transportiert die bewickelten Spulenträger 22 jeweils gradlinig parallel zur Drehachse 12 über ein Segment 46 eines Palettenmagazins 48, das ebenso viele Segmente 46 hat wie aus Werkstückaufnahme 24 und Drahtführer 10 bestehende Wickeleinrichtungen vorhanden sind, im Beispielsfall also sechs. Jedes Segment 46 hat eine sich unter der Spulenfördereinrichtung 42 in deren Förderrichtung erstreckende Reihe von Kupplungsstellen 50, die entsprechend wie die Kupplungsstellen 26 und 44 ausgebildet sein können. Im Ausführungsbeispiel hat jedes Segment 46 zwölf Kupplungsstellen 50, weil für jede von drei Phasen vier Spulen vorgesehen sind. Wenn die Schaltverbindungen zwischen den Spulen nach deren Montage im Statorblechpaket hergestellt werden, können die mit den Spulen 20 bewickelten Spulenträger 22 in der Reihenfolge, in der sie erzeugt worden sind, auf dem Segment des Palettenmagazins abgesetzt werden. Wenn aber gemäß Fig. 3 die zu einer Phase gehörenden Spulen jeweils ohne Drahtunterbrechung, also über die Schaltverbindungen 34 zusammenhängend, gewickelt werden, werden die zu einer Phase gehörenden Spulen 20 mit ihren Spulenträgern 22 zunächst z. B. auf den numerierten Plätzen 1, 4, 7, 10 des Segments 46 des Palettenmagazings 48 abgesetzt. Anschließend werden die nächsten vier durch Schaltverbindungen verbundenen Spulen 20 zu den Plätzen 2, 5, 8, 11 transportiert und schließlich die vier Spulen der letzten Phase zu den Plätzen 3, 6, 9, und 12.

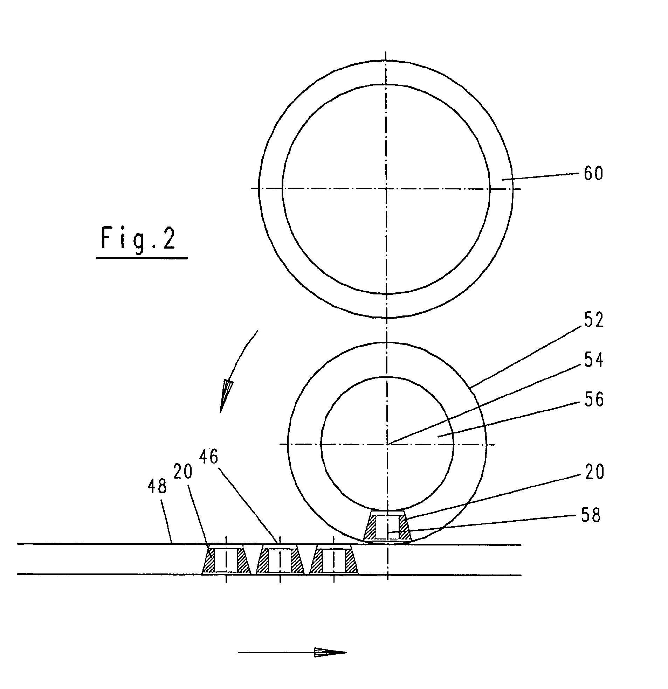

Die sechs Segmente 46 des Palettenmagazins 48 werden simultan in gleicher Weise mittels der Spulenfördereinrichtungen 42 befüllt. Wenn im Beispielsfall alle zwölf Speicherplätze der Segmente 46 mit Spulen belegt sind, folgt ein zweistufiger Fügevorgang. In der ersten Stufe wird das gesamte Palettenmagazin 48 mit seinen sechs Segmenten gemäß Fig. 2 linear und im wesentlichen tangential unter gleichzeitig rotierend angetriebenen Aufnehmern 52 hindurch verfahren. Während der Aufnehmer 52 eine Umdrehung ausführt, werden die im zugehörigen Segment 46 des Palettenmagazins 48 gesammelten, bewickelten Spulenträger 22 von den Kupplungsstellen 50 gelöst und mit Bezug auf die mit 54 bezeichnete Drehachse des Aufnehmers 52 radial von außen nach innen auf den Aufnehmer 52 geschoben. Dies geschieht in der Reihenfolge, die die Spulen in dem betreffenden Segment 46 des Palettenmagazins 48 bilden. Im vorliegenden Ausführungsbeispiel besteht der Aufnehmer 52 aus einem inneren Dorn 56 und dem radial inneren Bereich eines Statorblechpakets, also den Statorzähnen. Diese sind, um einen Zusammenhalt zu erreichen, an ihren radial inneren Enden durch kleine Stege miteinander verbunden. Die radial äußeren Enden der Statorzähne liegen frei, so daß die bewickelten Spulenträger 22 aus dem Palettenmagazin 48 radial von außen auf die Statorzähne 58, von denen in Fig. 2 nur einer angedeutet ist, aufgeschoben werden können.

In einer zweiten Fügestufe braucht dann nur noch der Aufnehmer 52 mit den aufgenommenen Spulen 20 in das durch den in Fig. 2 angedeuteten, radial äußeren, ringförmigen Teil eines Statorblechpakets gebildete Joch 60 eingefügt zu werden.

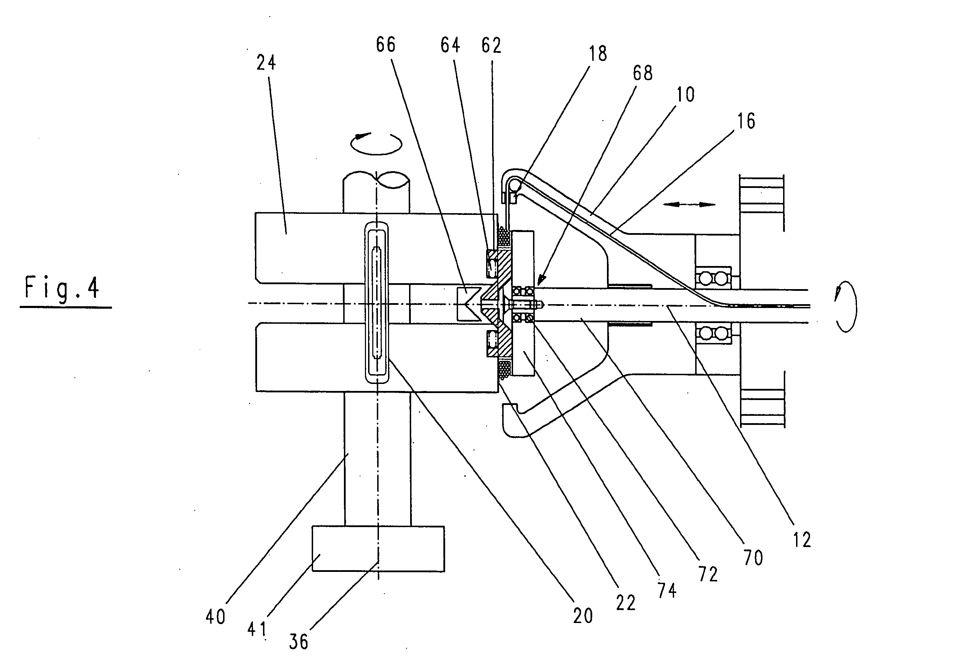

Fig. 4 zeigt in einer Draufsicht auf die teilweise im Schnitt dargestellte Werkzeugaufnahme 24 ein Ausführungsbeispiel für die Ausbildung einer Kupplungsstelle 26. Es kann sich dabei um in die Werkstückaufnahme 24 eingesetzte elastische Körper 62 handeln, die unter der Wirkung einer Feder 64 oder durch Eigenelastizität bestrebt sind, einen so großen äußeren Querschnitt einzunehmen, daß sie einen aufgesetzten Spulenträger 22 reibschlüssig halten und tragen können. Zum Lösen des Spulenträgers 22 von der Kupplungsstelle 26 kann durch zentralen Angriff eines Betätigungsglieds 66 und, je nach Gestaltung des elastischen Körpers 62, Ausübung einer Zug- oder Druckkraft entgegen der Wirkung der Feder 64 eine Verringerung des äußeren Querschnitts des elastischen Körpers 62 herbeigeführt werden.

Weiterhin ist in Fig. 4 gezeigt, daß der Spulenträger 22 während des Wickelvorgangs stirnseitig durch einen Stößel 68 abgestützt und gegen die Werkstückaufnahme 24 angedrückt gehalten wird. Der Stößel 68 besteht aus einem undrehbar, aber axial verschieblich in der Welle des Drahtführers 10 sitzenden Schaft 70 und einem an dessen vorderen Ende mittels eines Wälzlagers 72 axial fest, aber drehbar gelagerten Stützflansch 74, der bei Ausübung eines axialen Drucks auf den Schaft 70 an der äußeren Stirnseite des zu bewickelnden Spulenträgers 22 zur Anlage kommt.

Es versteht sich, daß sich eine Vorrichtung der vorstehend beschriebenen Art auch so bauen läßt, daß sich die horizontal liegenden Drehachsen 12 der Drahtführer 10 in einer gemeinsamen senkrechten Ebene befinden, die auch die Drehachse 36 der in diesem Fall übereinander angeordneten Werkstückaufnahmen 24 einschließt. Dementsprechend wären auch die Spulenfördereinrichtung 42 und das Palettenmagazin 48 sowie die Drehachse des Aufnehmers 52 um 90° gedreht anzuordnen.

Das Palettenmagazin ist notwendig, wenn phasenweise mit Schaltverbindungen 34 gewickelte Spulengruppen montiert werden sollen. Wenn die Schaltverbindungen erst nach der Montage der Spulen im Statorblechpaket hergestellt werden, besteht auch die Möglichkeit, unter Auslassung des Palettenmagazins 48 die bewickelten Spulen 20 mit ihren Spulenträgern 22 unmittelbar von der Spulenfördereinrichtung 42 auf den Aufnehmer 52 zu übertragen. Bei dieser Arbeitsweise müßten aber die Spulen 20 während des Wickelvorgangs umgekehrt konisch gewikkelt werden, so daß sich in der Ansicht nach Fig. 3 der größte Spulenquerschnitt nicht radial innen, sondern mit Bezug auf die Drehachse 36 der Werkstückaufnahme 24 an der radial äußeren Stirnseite der Spule 20 befindet.

## Patentansprüche

1. Vorrichtung zum Herstellen von Statoren für elektrische Motoren und Generatoren, die aus auf Spulenträger (22) gewickelten Spulen (20) und Teilen (58) oder Verbindungsteilen des Statorblechpakets gefügt sind, **gekennzeichnet durch**
- eine Wickeleinrichtung mit mehreren rotierend antreibbaren, achsparallelen Drahtführern (10), die jeweils mit einer schrittweise umlaufend antreibbaren Werkstückaufnahme (24) zusammenwirken, die an ihrem Umfang mehrere Kupplungsstellen (26) zur lösbaren Fixierung von Spulenträgern (22) aufweist, die an einer Beladestation (28) an einer Kupplungsstelle (26) fixierbar, an einer Wickelstation (30) **durch** den zugeordneten Drahtführer (10) mit Spulendraht (16) bewickelbar und an einer Entladestation (32) von der Werkstückaufnahme (24) lösbar sind,
- eine Spulenfördereinrichtung (42) mit Kupplungsstellen (44) zur Aufnahme und lösbaren Fixierung der bewickelten Spulenträger (22) an der Entladestation (32) und zum Weitertransport,
- ein Palettenmagazin (48) mit reihenweise angeordneten Kupplungsstellen (50) zur Aufnahme und lösbaren Fixierung der von der Spulenfördereinrichtung (42) herantransportierten bewickelten Spulenträger und
- eine Fügeeinrichtung (52), in der im Palettenmagazin (48) in einer Reihe gesammelte, bewickelte Spulenträger (22) mit den Teilen (58) oder Verbindungsteilen eines Statorblechpakets zusammenfügbar sind.

2. Vorrichtung nach Anspruch 1, **dadurch gekennzeichnet, daß** die Drehachsen (12) der nebeneinander angeordneten Drahtführer (10) in einer horizontalen Ebene angeordnet sind.

3. Vorrichtung nach Anspruch 1 oder 2, **dadurch gekennzeichnet, daß** die nebeneinander angeordneten Drahtführer (10) durch einen gemeinsamen Drehantrieb (14), zum Beispiel mittels Antriebskette oder -riemen, antreibbar sind.

4. Vorrichtung nach einem der Ansprüche 1 - 3, **dadurch gekennzeichnet, daß** die den Drahtführern (10) jeweils zugeordneten, drehbaren Werkstückaufnahmen (24) koaxial angeordnet und durch einen Drehantrieb (41) mittels einer gemeinsamen Antriebswelle (40) antreibbar sind.

5. Vorrichtung nach Anspruch 4, **dadurch gekennzeichnet, daß** die Drehachse (36) der gemeinsamen Antriebswelle (40) der Werkstückaufnahmen (24) in derselben geraden Ebene liegt wie die Drehachsen (12) der Drahtführer (10) und einen rechten Winkel mit diesen bildet.

6. Vorrichtung nach Anspruch 4 oder 5, **dadurch gekennzeichnet, daß** sich an jeder Werkstückaufnahme (24) die Beladestation (28) und die Entladestation (32) im wesentlichen senkrecht unter beziehungsweise über ihrer Drehachse (36) befinden, während die Wickelstation (30) auf dem Niveau der horizontalen Ebene durch die Drehachse (36) angeordnet ist.

7. Vorrichtung nach einem der vorhergehenden Ansprüche, **dadurch gekennzeichnet, daß** sich die von den Spulenwindungen umgebene radiale Mittellängsachse (38) der bewickelten Spulenträger (22) und die entsprechende Mittellängsachse der leeren Spulenträger (22) in der an einer Kupplungsstelle (26) der Werkstückaufnahme (24) fixierten Stellung mit Bezug auf deren Drehachse (36) radial erstreckt.

8. Vorrichtung nach einem der vorhergehenden Ansprüche, **dadurch gekennzeichnet, daß** an Kupplungsstellen (44) der Spulenfördereinrichtung (42) fixierte Spulenträger (22) im wesentlichen denselben Zwischenabstand haben wie an Kupplungsstellen (26) der Werkstückaufnahme (24) fixierte Spulenträger (22).

9. Vorrichtung nach Anspruch 8, **dadurch gekennzeichnet, daß** der Zwischenabstand der an der Werkstückaufnahme (24) fixierten Spulenträger (22) maximal im wesentlichen so groß ist wie der Zwischenabstand von elektrisch miteinander verbunden Spulen (20) einer Phase des Stators im montierten Zustand.

10. Vorrichtung nach Anspruch 8 oder 9, **dadurch gekennzeichnet, daß** sich in Draufsicht die Spulenfördereinrichtung (42) und die Reihe der Kupplungsstellen (50) des Palettenmagazins (48) in Richtung der Drehachse (12) des Drahtführers (10) erstrecken.

11. Vorrichtung nach Anspruch 10, **dadurch gekennzeichnet, daß** sich die Spulenfördereinrichtung (42) von der Entladestation (32) über die Länge der Reihe der Kupplungsstellen (50) des Palettenmagazins (48) erstreckt.

12. Vorrichtung nach einem der vorhergehenden Ansprüche, **dadurch gekennzeichnet, daß** die nebeneinander angeordneten Spulenfördereinrichtungen (42) einen gemeinsamen Antrieb haben und simultan bewegbar sind.

13. Vorrichtung nach einem der vorhergehenden Ansprüche, **dadurch gekennzeichnet, daß** das Palettenmagazin (48) nebeneinander angeordnete Segmente (46) mit jeweils einer Reihe von Kupplungsstellen (50) aufweist, deren Anzahl jeweils der in einem zu montierenden Stator vorhandenen Spulen (20) entspricht, und durch einen Antrieb insgesamt mit allen Segmenten (46) wenigstens in einer Richtung hin- und hergehend bewegbar ist.

14. Vorrichtung nach einem der vorhergehenden Ansprüche, **dadurch gekennzeichnet, daß** bei der Übergabe eines bewickelten Spulenträgers (22) von der Werkstückaufnahme (24) an die Spulenfördereinrichtung (42) und von dieser an das Palettenmagazin (48) die jeweils beteiligten zwei Kupplungsstellen (26, 44, 50) der Spulenfördereinrichtung (42) und der Werkstückaufnahme (24) beziehungsweise des Palettenmagazins (48) miteinander und mit der Mittellängsachse (38) des Spulenträgers (22) fluchten.

15. Vorrichtung nach einem der vorhergehenden Ansprüche, **dadurch gekennzeichnet, daß** die Spulenträger (22) längliche, ringförmige Hohlkörper mit einem Durchgangsloch und stirnseitigen Flanschen sind.

16. Vorrichtung nach Anspruch 15, **dadurch gekennzeichnet, daß** die Kupplungsstellen in die Durchgangslöcher der Spulenträger (22) passende Zapfen sind, die unter Vorspannung im Querschnitt aufweitbar sind, die Spulenträger (22) reibschlüssig fixieren und zu deren Lösen durch ein Betätigungsglied gegen die Federvorspannung im Querschnitt verkleinerbar sind.

17. Vorrichtung nach einem der vorhergehenden Ansprüche, **dadurch gekennzeichnet, daß** die Fügeeinrichtung in einer ersten Arbeitsstation einen rotierend antreibbaren Aufnehmer (52) und einen Linearantrieb zur Erzeugung einer translatorischen Relativbewegung zwischen dem Aufnehmer (52) und einer im Palettenmagazin (48) aufgenommenen Reihe (46) bewickelter Spulenträger (22) aufweist, wobei die kontinuierliche oder schrittweise Drehbewegung und translatorische Bewegung so aufeinander abgestimmt sind, daß die bewickelten Spulenträger (22) während einer Umdrehung des Aufnehmers (52) der Reihe nach an dessen Umfang fixiert sind.

18. Vorrichtung nach Anspruch 17, **dadurch gekennzeichnet, daß** der Aufnehmer (52) aus einem zentralen Dorn (56) und einem darauf lösbar fixierten, sternförmigen, radial inneren Teil (58) eines Stators besteht, und daß die als Hohlkörper ausgebildeten, bewickelten Spulenträger (22) während einer Umdrehung des Aufnehmers (52) von radial außen auf die an ihren radial inneren Enden durch Stege verbundenen Statorzähne (58) aufschiebbar sind.

19. Vorrichtung nach Anspruch 17, **dadurch gekennzeichnet, daß** der Aufnehmer (52) aus einem zentralen Dorn besteht, an dem während einer Umdrehung als Statorzähne ausgebildete, bewickelte Spulenaufnehmer lösbar fixierbar sind.

20. Vorrichtung nach Anspruch 18 oder 19, **dadurch gekennzeichnet, daß** die Fügeeinrichtung in einer zweiten Arbeitsstation Halteorgane für ein die Statorzähne (58) radial außen umfassendes Joch (60) und Führungsmittel zum Einführen des die bewickelten Spulenaufnehmer (22) tragenden Dorns (56) in das Joch (60) aufweist.

21. Verfahren zum Herstellen von Statoren für bürstenlose elektrische Motoren und Generatoren, die aus auf Spulenträger (22) gewickelten Spulen und Teilen (58) oder Verbindungsteilen des Statorblechpakets gefügt werden, **dadurch gekennzeichnet, daß** die zu einer Phase gehörenden Spulenträger (22) ohne Drahtunterbrechung nacheinander bewickelt und zusammen mit den zu den anderen Phasen gehörenden, jeweils ohne Drahtunterbrechung bewickelten Spulenträgern (22) in einem Palettenmagazin (48) in einer Reihe derart abgelegt werden, daß ihre Reihenfolge mit derjenigen am Umfang des Stators übereinstimmt, und daß anschließend die bewickelten Spulenträger (22) der Reihe nach an den Umfang eines rotierend antreibbaren Aufnehmers (52) herangefahren, radial von außen an den Aufnehmer (52) angefügt und danach mit einem sie radial außen umgebenden Joch (60) zusammengefügt werden.
